# EUROPÄISCHE PATENTANMELDUNG

(11) **EP 4 679 705 A1**
(43) Veröffentlichungstag der Anmeldung: **14.01.2026**
(21) Anmeldenummer: 24187106.0
(22) Anmeldetag: 08.07.2024
(51) Int. Cl.: H02M 7/487

(54) **T-TYP NPC DREIPUNKTUMRICHTER MIT MONOLITISCHEN 4Q GAN-HEMT MITTELPUNKTSSCHALTERN**

(71) Anmelder: Siemens Aktiengesellschaft, 80333 München (DE)
(72) Erfinder: Gick, Sebastian, 96167 Königsfeld (DE); Bakran, Mark-Matthias, 91052 Erlangen (DE); Pfeifer, Markus, 90455 Nürnberg (DE)
(74) Vertreter: Siemens Patent Attorneys

(57) **Zusammenfassung**

Die Erfindung betrifft einen Mehrlevel-Umrichter (6) mit der Schaltungstopologie T-Type mit mindestens einem Hauptzweig (7) und mindestens einem T-Zweig (8), wobei der Hauptzweig (7) mehrere Halbleiterschalter (T1 bis T6) aufweist und wobei der T-Zweig (8) mindestens einen monolithischen, bidirektionalen, selbstleitenden Halbleiterschalter (T7 bis T9) aufweist.

## Beschreibung

Die Erfindung betrifft einen Mehrlevel-Umrichter.

Unter den diversen Wechselrichtertopologien existiert der sogenannte T-Type-Wechselrichter, der auch als NPC2 bezeichnet wird. Dieser Typ Wechselrichter oder Umrichter ist ein 3-Punkt-Wechselrichter und wird eingesetzt, um eine geringere Stromverzerrung zu erzielen. Ein Merkmal dieses Umrichters ist die Verwendung von bidirektionalen Schaltern. Bidirektionale Schalter sind Leistungshalbleiter, die sowohl bidirektional leitfähig als auch sperrfähig sein müssen. Wenn ein solcher Umrichter an einer Last, beispielsweise einer Maschine, betrieben wird, kann bauartbedingt ein sehr guter Vollastwirkungsgrad erzielt werden. Um darüber hinaus einen sehr guten Teillastwirkungsgrad zu erzielen, ist es nötig, einen T-Zweig Schalter mit geringen Leitverlusten vorzusehen. Im Teillastbereich wird insbesondere ein Schalter ohne Schwellspannungen und mit nur geringem Widerstand gesucht. Diese Dimensionierung würde zu einem flächenmäßig großen T-Zweig aus Wide-Bandgap-Halbleitern (z. B. SiC-MOSFET) führen, der im Umrichterbetrieb thermisch nicht ausgelastet wird. Damit gehen hohe Kosten einher.

Bisher existieren für den T-Zweig des T-Type-Wechselrichters folgende Realisierungen: Entweder werden je zwei IGBTs mit antiparalleler Freilaufdiode in Serie geschaltet [1], [2]. Alternativ werden zwei MOSFET antiseriell geschaltet. Eine weitere Form ist ein Halbleiterschalter mit einer Anordnung von vier Dioden [2]. Diese Anordnungen haben im Fall von bipolaren Bauelementen eine hohe Schwellspannung (zwei oder sogar drei Sehwellspannungen in Serie) oder im Fall von SiC-MOSFET hohe Kosten. Alternativ zu SiC-MOSFETs können auch GaN-basierte HEMT in antiserieller Verschaltung im T-Zweig eingesetzt [3] werden, da deren Sperrspannung im T-Zweig für halbe Zwischenkreisspannung (300-400 V) ausreichend ist. Damit können hier z.B. 650 V-Bauelemente eingesetzt werden, während bei den Hauptschaltern 1200 V-Bauelemente benötigt werden.

Die Aufgabe der vorliegenden Erfindung besteht darin, einen neuartigen Mehrlevel-Umrichter anzugeben.

Die Aufgabe wird gelöst durch einen Mehrlevel-Umrichter mit den Merkmalen des Anspruchs 1.

Vorteilhafte Weiterbildungen sind Gegenstand der Unteransprüche.

Erfindungsgemäß wird ein Mehrlevel-Umrichter mit der Schaltungstopologie T-Type mit mindestens einem Hauptzweig und mindestens einem T-Zweig vorgeschlagen, wobei der Hauptzweig mehrere Halbleiterschalter aufweist und wobei der T-Zweig mindestens einen monolithischen, bidirektionalen, selbstleitenden Halbleiterschalter aufweist.

In einer Ausführungsform ist der Halbleiterschalter im T-Zweig vom Typ GaN HEMT.

In einer Ausführungsform weist der GaN HEMT zwei Gates auf.

In einer Ausführungsform ist der Halbleiterschalter im T-Zweig vom Typ D-Mode GaN HEMT.

In einer Ausführungsform ist der Mehrlevel-Umrichter als 3-Level-Umrichter mit genau einem T-Zweig ausgebildet.

In einer Ausführungsform sind die Halbleiterschalter im Hauptzweig von einem anderen Typ als der mindestens eine Halbleiterschalter im T -Zweig.

In einer Ausführungsform sind die Halbleiterschalter im Hauptzweig als Si-IGBT mit Freilaufdiode oder als SiC-MOSFET ausgebildet.

In einer Ausführungsform ist der mindestens eine Halbleiterschalter im T-Zweig als Kaskode ausgeführt.

Der Mehrlevel-Umrichter kann insbesondere zum Betrieb einer Asynchronmaschine verwendet werden.

Die vorliegende Erfindung löst das Problem, einen kosteneffizienten und teillasteffizienten Stromrichter, der zum Betrieb einer dreiphasigen elektrischen Maschine genutzt wird, als T-type Umrichter auszuführen. Die Erfindung bezieht sich auf die T-Schalter eines Hybridumrichters, dessen Hauptschalter in Silizium als IGBT mit antiparallelen Dioden ausgeführt werden können.

Ausführungsbeispiele der Erfindung werden im Folgenden anhand von Zeichnungen näher erläutert.

Darin zeigen:
- Fig. 1: eine schematische Ansicht eines GaN HEMT,
- Fig. 2: eine schematische Ansicht eines GaN HEMT mit einem zweiten Gate, und
- Fig. 3: eine schematische Ansicht eines Mehrlevel-Umrichters der Topologie T-Type.

Einander entsprechende Teile sind in allen Figuren mit den gleichen Bezugszeichen versehen.

Wie bereits aus mehreren Veröffentlichungen [4] bekannt ist, kann durch Verwendung eines bidirektionalen Schalters anstelle von zwei antiseriell verschalteten Schaltern Faktor zwei bis vier an Halbleiterfläche eingespart werden. Dies setzt allerdings Halbleiterschalter voraus, welche im Sperrzustand ein dreieckförmiges Feld aufweisen. Dies gilt nicht für normale Feldstopp-IGBTs oder auch Feldstopp-MOSFET. Weiterhin haben normale Leistungshalbleiter ein vertikales Design und lassen sich daher mit sinnvollem Aufwand nur einseitig ansteuern. Es ist also ein Halbleiter gesucht, der keine Schwellspannung besitzt, aufwandsarm auch bidirektional ausgeführt werden kann und dabei einen möglichst gleichen Ein-Widerstand aufweist wie der unidirektionale Halbleiter.

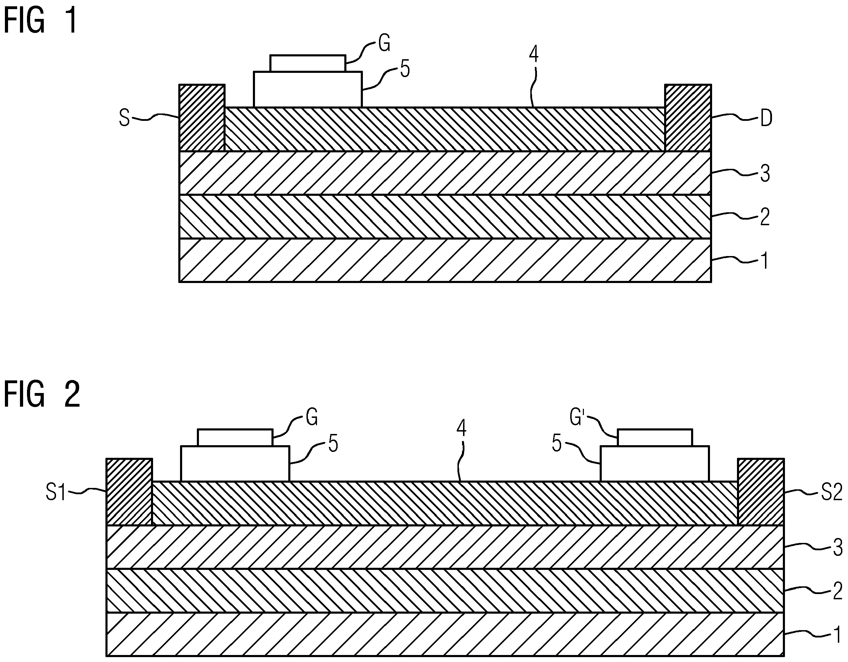

Figur 1 ist eine schematische Ansicht eines GaN HEMT (Gallium-Nitrid High-Electron-Mobility Transistor). Der GaN HEMT weist ein halbleitendes Substrat 1 (beispielsweise aus Silizium-Carbid, Saphir oder Silizium), eine auf dem Substrat 1 angeordnete Pufferschicht 2 (beispielsweise aus Gallium-Nitrid), eine auf der Pufferschicht 2 angeordnete dritte Schicht 3 (Kanalschicht, GaN channel) und eine auf der dritten Schicht 3 angeordnete vierte Schicht 4 (Barriereschicht, AlGaN barrier) auf. In die vierte Schicht 4 eingebettet sind zwei mit der dritten Schicht 3 in Kontakt stehende Anschlüsse S, D, nämlich Source S und Drain D, die voneinander beabstandet sind. Auf der vierten Schicht 4 ist ein weiterer Anschluss G angeordnet, nämlich Gate G, der von Source S und Drain D beabstandet ist, jedoch näher an Source S angeordnet sein kann, wobei das Gate G über ein Dielektrikum 5 von der vierten Schicht 4 getrennt ist.

GaN HEMTs weisen Eigenschaften auf, die unter den Randbedingungen hoher Teillasteffizienz und hoher Kosteneffizienz vorteilhaft sind.

Als laterale Bauelemente ohne Feldstopp ist es bei GaN HEMTs einfach möglich, durch Aufbringen eines zweiten Gates G` einen bidirektional sperrenden und leitenden Schalter zu erhalten [5].

Figur 2 ist eine schematische Ansicht eines GaN HEMT mit einem zweiten Gate G`. Der GaN HEMT weist ein halbleitendes Substrat 1 (beispielsweise aus Silizium-Carbid, Saphir oder Silizium), eine auf dem Substrat 1 angeordnete Pufferschicht 2 (beispielsweise aus Gallium-Nitrid), eine auf der Pufferschicht 2 angeordnete dritte Schicht 3 und eine auf der dritten Schicht 3 angeordnete vierte Schicht 4 auf. In die vierte Schicht 4 eingebettet sind zwei mit der dritten Schicht 3 in Kontakt stehende Anschlüsse S1, S2, nämlich Source S1 und Source S2, die voneinander beabstandet sind. Auf der vierten Schicht 4 ist ein weiterer Anschluss G angeordnet, nämlich Gate G, der von Source S1 und Source S2 beabstandet ist, jedoch näher an Source S1 angeordnet sein kann. Ferner ist ein zweites Gate G' auf der vierten Schicht 4 beabstandet vom ersten Gate G angeordnet. Das zweite Gate G' kann sich dabei in der Nähe von Source S2 befinden. Die Gates G, G' sind über ein Dielektrikum 5 von der vierten Schicht 4 getrennt.

Ein weiterer Vorteil von GaN-Bauelementen ist der hohe Temperaturkoeffizient des Drain-Source-Widerstands R_{DS,on}. Meist als Nachteil von GaN-Bauelementen angeführt, führt dies in der Anwendung zu einem besseren Teillast-Wirkungsgrad aufgrund des niedrigen Drain-Source-Widerstands R_{DS,on} bei niedrigen Temperaturen, wie sie in Teillast auftreten.

In einer weiteren Ausführungsform kann ein D-mode GaN HEMT (depletion mode normally-on) in einem T-Type-Umrichter verwendet.

Der D-Mode GaN HEMT zeichnet sich durch zahlreiche Vorteile gegenüber dem E-Mode GaN (enhancement mode normally-off) aus, insbesondere eine höhere Zuverlässigkeit, eine absolut höhere Treiberspannungsbandbreite und einen deutlich geringeren Drain-Source-Widerstand R_{DS,on}. Dies führt nochmals zu einer Kostensenkung und Wirkungsgradsteigerung. Als sogenanntes normally-on-Bauelement ist er allerdings bei den Hauptschaltern eines Umrichters mit Spannungszwischenkreis nicht einsetzbar oder benötigt zusätzlich einen weiteren Schalter in Serie (Kaskode), was den Aufwand erhöht und die Verlustbilanz verschlechtert.

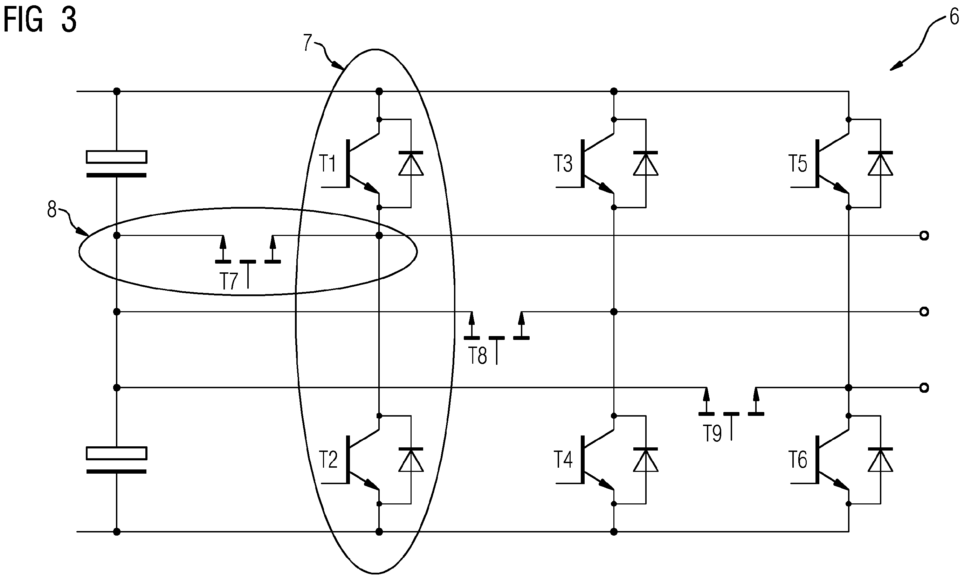

Figur 3 ist eine schematische Ansicht eines Mehrlevel-Umrichters 6 der Topologie T-Type mit mehreren Hauptzweigen 7 und T-Zweigen 8. In den Hauptzweigen 7 sind je zwei Halbleiterschalter T1 bis T6, auch als Hauptbauelemente T1 bis T6 bezeichnet, angeordnet. In den T-Zweigen 8 ist je mindestens ein Halbleiterschalter T7 bis T9 angeordnet, der als GaN HEMT, insbesondere D-mode GaN HEMT, beispielsweise mit einem oder zwei Gates G, G', ausgebildet ist.

Die Besonderheit des T-Type-Umrichters ist, dass im T-Zweig 8 auch normally-on-Bauelemente eingesetzt werden können, da die Hauptbauelemente (T1 bis T6) als normally-off-Bauelemente die Sperrfähigkeit im Fehlerfall sicherstellen.

Im T-Zweig 8 des erfindungsgemäßen T-Type-Umrichters
- werden bidirektional sperrende Bauelemente benötigt,
- werden bidirektional leitende Bauelemente benötigt,
- können normally-on-Bauelemente eingesetzt werden.

Bei bestimmten Anwendungen ist der Einsatz von normally-on-Bauelementen sogar besonders vorteilhaft, weil so automatisch ein sogenannter "aktiver Kurzschluss" geschaltet wird, beispielsweise bei Ausfall der Steuerspannung. Auf diese Weise wird der Zusatzaufwand für eine redundante Ausführung der Stromversorgung vermieden.

Ein auf hohen Teillastwirkungsgrad optimierter Umrichter benötigt im T-Zweig 8 Bauelemente ohne Schwellspannung. Ein auf hohen Teillastwirkungsgrad optimierter Umrichter funktioniert optimal mit Bauelementen im T-Zweig 8, die einen hohen Temperaturkoeffizienten aufweisen.

Weiterhin erlaubt ein gut ausgelegter T-Zweig 8 eine kleinere Dimensionierung der Hauptbauelemente für die gleiche Leistungsfähigkeit.

Es ist zu erwarten, dass bei Verwendung von Silizium-IGBTs im Hauptzweig 7 die Halbleiterkosten des so entstandenen T-Type-Umrichters geringer ausfallen als die eines leistungsgleichen IGBT B6-Umrichters, wohingegen der Wirkungsgrad des entstandenen Umrichters in Teillast deutlich höher ausfällt.

Unabhängig vom grammatikalischen Geschlecht eines bestimmten Begriffes sind Personen mit männlicher, weiblicher oder anderer Geschlechteridentität mit umfasst.

### Literaturverzeichnis

[1] J. W K. Mario Schweizer, "Design and Implementation of a Highly Efficient Three-Level T-Type Converter for Low-Voltage Applications," IEEE TRANSACTIONS ON POVVER ELECTRONICS VOL. 28, NO. 2, FEBRUARY 2013, 2013
[2] S. B. e. a. B. Jayant Baliga, "The BIDFET Device and its Impact on Converters," IEEE POVVER ELECTRONICS MAGAZINE:', March 2023
[3] M. Z. D. Z. X. Y. Guoliang Yang, "The Benefits of SiC/GaN Devices in T-Type Three Level Inverter Hybrid Applications." 2022 IEEE International Power Electronics and Application Conference and Exposition (PEAC), 2022
[4] J. W. K. Jonas Huber, "Monolithic Bidirectional Power Transistors," IEEE POWER ELECTRONICS MAGAZINE, 2023
[5] O. H. J. B. M. W. S. D. J. W. Carsten Kuring, "Novel monolithically integrated bidirectional GaN HEMT," 2018 IEEE Energy Conversion Congress and Exposition (ECCE), 2018
[6] Y. K. Y. Y. A. S. T.I. M. N. H. F. H. I. T. H. Hiroaki Ueno, "A 3-Phase T-type 3-Level Inverter using GaN Bidirectional Switch with Very Low On-State Resistance," PCIM Europe 2019, 2019.

## Patentansprüche

1. Mehrlevel-Umrichter (6) mit der Schaltungstopologie T-Type mit mindestens einem Hauptzweig (7) und mindestens einem T-Zweig (8), wobei der Hauptzweig (7) mehrere Halbleiterschalter (T1 bis T6) aufweist und wobei der T-Zweig (8) mindestens einen monolithischen, bidirektionalen, selbstleitenden Halbleiterschalter (T7 bis T9) aufweist.

2. Mehrlevel-Umrichter (6) nach Anspruch 1, wobei der Halbleiterschalter (T7 bis T9) im TZweig (8) vom Typ GaN HEMT ist.

3. Mehrlevel-Umrichter (6) nach Anspruch 2, wobei der GaN HEMT zwei Gates (G, G`) aufweist.

4. Mehrlevel-Umrichter (6) nach Anspruch 2 oder 3, wobei der Halbleiterschalter (T7 bis T9) im T-Zweig (8) vom Typ D-Mode GaN HEMT ist.

5. Mehrlevel-Umrichter (6) nach einem der vorhergehenden Ansprüche, ausgebildet als 3-Level-Umrichter mit genau einem T-Zweig (8).

6. Mehrlevel-Umrichter (6) nach einem der vorhergehenden Ansprüche, wobei die Halbleiterschalter (T1 bis T6) im Hauptzweig (7) von einem anderen Typ als der mindestens eine Halbleiterschalter (T7 bis T9) im T-Zweig (8) sind.

7. Mehrlevel-Umrichter (6) nach Anspruch 6, wobei die Halbleiterschalter (T1 bis T6) im Hauptzweig (7) als Si-IGBT mit Freilaufdiode oder als SiC-MOSFET ausgebildet sind.

8. Mehrlevel-Umrichter (6) nach einem der vorhergehenden Ansprüche, wobei der Halbleiterschalter (T7 bis T9) im T-Zweig (8) als Kaskode ausgeführt ist.

9. Verwendung eines Mehrlevel-Umrichters (6) nach einem der vorhergehenden Ansprüche zum Betrieb einer Asynchronmaschine.
